# EUROPÄISCHE PATENTANMELDUNG

(11) **EP 1 146 500 A2**
(43) Veröffentlichungstag der Anmeldung: **17.10.2001**
(21) Anmeldenummer: 01109068.5
(22) Anmeldetag: 11.04.2001
(51) Int. Cl.: G09F 19/12

(54) **Gefäss mit Werbe- oder Dekorationselement**

(30) Priorität: 11.04.2000 DE 20006423 U
(71) Anmelder: Firma Helmut Steinmetz Inh. Manfred Braun, 65795 Hattersheim (DE)
(72) Erfinder: Braun, Manfred, 65795 Hattershaim (DE)
(74) Vertreter: KEIL & SCHAAFHAUSEN

(57) **Zusammenfassung**

Die Erfindung betrifft ein Gefäß, insbesondere eine Flasche, mit z.B. einem Werbe- oder Dekorationselement. Letzteres weist eine zwischen zwei durchscheinenden äußeren Folien eingebrachte Trägerfolie auf, die mit wenigstens einem Hologramm ausgestattet ist. Auch Hologramm-Schnipsel sind möglich welche gut in einer Flüssigkeit schweben. Mit der Erfindung wird ein Gefäß bereitgestellt, dass zu dauerhaften Werbe- oder Dekorationszwecken eine besondere Aufmerksamkeit auf sich zieht und einfach herstellbar ist.

## Beschreibung

Die Erfindung betrifft ein Gefäß, insbesondere eine Flasche, mit einem Werbe- oder Dekorationselement.

Für den Verkauf von Flüssigkeiten, wie Parfums, Getränke und dgl. ist es bekannt, das für deren Aufnahme bestimmte Gefäß zu Werbezwecken mit einem Etikett zu versehen. Derartige Etiketten sind äußeren Einflüssen wie Feuchtigkeit, Schmutz oder dgl. ausgesetzt und werden daher schon vor dem Verkauf des Produktes häufig unansehnlich. Es ist z.B. auch an sich bekannt, Früchte in mit Flüssigkeit gefüllten Gefäßen, wie bspw. Flaschen, aufzunehmen, um als Genussmittel zu dienen oder dem Käufer einen Hinweis auf den Inhalt der Flasche zu geben.

Es ist Aufgabe der vorliegenden Erfindung, ein Gefäß bereitzustellen, das zu dauerhaften Werbe- oder Dekorationszwecken eine besondere Aufmerksamkeit auf sich zieht und einfach verwirklicht werden kann.

Diese Aufgabe wird erfindungsgemäß dadurch gelöst, dass in dem Gefäß als Werbe- oder Dekorationselement eine zwischen zwei durchscheinenden äußeren Folien eingebrachte Trägerfolie, die mit wenigstens einem Hologramm ausgestattet ist, aufgenommen ist. Alternativ ist es auch möglich in dem Gefäß eine Verteilung von Hologramm-tragenden Trägerfolien-Schnipseln einer Größe von z.B. zwischen etwa 1 und 10 mm vorzusehen, welche mit Klebstoff oder Lack alkoholfest gemacht sind.

Das folienartige Werbe- oder Dekorationselement lässt sich leicht in das Gefäß einbringen, da sich die Folien einrollen lassen, um durch den gegebenenfalls beengten Hals in das Gefäß eingeführt zu werden. Im Inneren des Gefäßes können sich die Folien dann wieder entrollen, so dass das Hologramm vollständig sichtbar aber geschützt ist. Die Ausstattung des Gefäßes mit einem Hologramm bietet einen besonderen optischen Effekt, insbesondere bei Beaufschlagung mit Licht aus besonderen Lichtquellen, aber auch bei normalem Tageslicht in Räumen oder im Freien. Durch die durchscheinenden äußeren Schutzfolien entsteht der Effekt, dass das Hologramm quasi in dem Gefäß schwebt und somit in Abhängigkeit des Blickwinkels des Betrachters und des Lichteinfalls ein ansprechendes und auffallendes Erscheinungsbild des Gefäßes bietet.

Das Gefäß ist insbesondere mit einer Füllung aus einer vorzugsweise durchsichtigen oder durchscheinenden z.B. Alkohol enthaltender Flüssigkeit, z.B. Parfum, Desodorant, Getränk oder dgl. gefüllt. In der Flüssigkeit kann das Werbe- oder Dekorationselement schweben. Noch besser kann die Schnipselverteilung in der Flüssigkeit schweben und zu einem Glitzereffekt führen.

Vorzugsweise besteht die Trägerfolie bzw. bestehen die Trägerfolien-Schnipsel aus Kunststoff und/oder Metall. Dem Werbe- oder Dekorationselement bzw. den Trägerfolien-Schnipseln kann bzw. können durch Kombination beider Materialien neben dem Hologramm eine zusätzliche dekorative Wirkung gegeben werden. Das Werbe- oder Dekorationselement kann außerdem mit einem Werbetext bedruckt sein.

Nach einer Ausführungsform der Erfindung sind die beiden äußeren Folien insbesondere am Rand miteinander verbunden, z.B. verklebt. Dadurch kann vermieden werden, dass das Hologramm auf der zwischen den äußeren Folien eingebrachten Trägerfolie bspw. durch Luft, Feuchtigkeit oder hochprozentigem Alkohol in seiner Wirkungsweise beeinträchtigt wird.

Alternativ hierzu ist es möglich, die beiden äußeren Folien miteinander zu verschweißen. Auf diese Weise kann das Hologramm auf der Trägerfolie noch wirkungsvoller gegen Beeinträchtigung durch hochprozentigen Alkohol geschützt werden.

Untersucht wurden äußere PIT-Folien (0,020 mm dicke) mit einem Fotopolymerfilm als Trägerfolie dazwischen von 0,010 mm Stärke mit einem Hologramm, kein Klebstoff, vier Kanten verschweißt in einer von 85 % Alkoholgehalt. Nach einer Lagerung von 35 Wochen bei Zimmertemperatur zeigten sich keine Veränderungen des Hologramms.

Auch ist eine Abdichtung bzw. eine Schutzumhüllung mittels Lack möglich.

In den zuvor genannten Ausführungen kommt es insbesondere auf die Randabdichtung gegen das Eindringen von Flüssigkeit insbesondere hochprozentiger Alkohol an. Es empfiehlt sich dabei, die Randverschweißung, wenn eine solche erfolgt, mit einem erhitzten Stanzwerkzeug oder mit einem Laserschneidgerät durchzuführen, wobei nach dem Trennvorgang ein Abdichtungsvorgang durch Verschweißen erfolgt.

Das Stanzwerkzeug wird auf eine Temperatur im Bereich des Schmelzpunktes der Folien erhitzt. Dabei ist der Schmelzpunkt der beiden äußeren Folien maßgeblich, weil primär diese miteinander verschweißt werden sollen. Übliche Kunststofffolien haben einen Schmelzpunkt zwischen 330 - 470°F, wobei Schnittzeiten zwischen 2 - 8 Sekunden ausreichen.

Der Einsatz eines Laserschneidgerätes reduziert die Gestehungskosten, weil kein gesondertes sich abnutzendes Schneidwerkzeug erforderlich ist. Es kann z.B. ein CO₂-Laser (Kohlendioxid-Laser) eingesetzt werden, welcher über einen Strahldurchmesser von etwa 0,03 mm verfügt. Die Strahlungsenergie des stark fokusierten Laserstrahls bewirkt eine räumlich begrenzte Verdampfung des Folienwerkstoffes am Auftreffpunkt sowie eine anschließende Verschweißung der Schnittkanten.

Gemäß einer anderen Ausführungsform der Erfindung wird die Trägerfolie oder der mehrlagige Sandwichkörper zusätzlich oder stattdessen mit einem durchsichtigen Lack überzogen. Dies erfolgt vorzugsweise mittels Tauchlackierung, wobei das genannte Teil vollständig in ein Lackbad eingebracht wird, so dass eine zuverlässige Randabdichtung erfolgt. Verwendet werden kann ein 2-Komponenten-Phenolepoxid-Lack, welcher bei 100°C über ca. 20 Min. getrocknet wird.

In Weiterbildung der Erfindung ist vorgesehen, dass die beiden äußeren Folien, der Klebstoff und/oder der Lack aus einem insbesondere gegen hochprozentigen Alkohol beständigen Material bestehen. Damit ist es möglich, das Werbe- oder Dekorationselement nicht nur in einer chemisch neutralen Umgebung aufzubewahren, sondern auch in einem Gefäß, das eine z.B. hochprozentige alkoholische Flüssigkeit, wie Parfum, enthält. Die beiden äußeren Folien schützen dabei die Trägerfolie mit dem darauf aufgebrachten Hologramm, das gegebenenfalls nicht alkoholbeständig ist, vor Beschädigungen, wie bspw. Verblassen, Trübwerden oder ähnlichem.

Insbesondere ist daran gedacht, dass das Gefäß ein Parfumflakon, eine Getränkeflasche oder eine Medizinflasche ist.

Das Hologramm kann einen Gegenstand abbilden, der mit dem Inhalt des Gefäßes assoziiert wird. So ist es bspw. möglich, in dem Parfumflakon für ein Rosenparfum ein Werbeelement mit einem eine Rose darstellenden Hologramm vorzusehen. Das Hologramm eignet sich aber z.B. auch für die Wiedergabe eines Firmenlogos, einer Marke oder dgl. Kennzeichenmittel.

## Patentansprüche

1. Gefäß, insbesondere Flasche, in welchem bzw. welcher eine zwischen zwei durchscheinenden äußeren Folien eingebrachte Trägerfolie, die mit wenigstens einem Hologramm ausgestattet ist, oder eine Verteilung von Hologramm-tragenden Trägerfolien-Schnipseln einer Größe von z.B. zwischen etwa 1 und 10 mm, welche mit Klebstoff oder Lack alkoholfest gemacht sind, aufgenommen ist.

2. Gefäß nach Anspruch 1 mit einer Füllung aus einer vorzugsweise durchsichtigen oder durchscheinenden Flüssigkeit, insbesondere einem Parfum, Desodorant, Getränk oder dgl..

3. Gefäß nach Anspruch 1 oder 2, **dadurch gekennzeichnet, dass** die Trägerfolie aus Kunststoff und/oder Metall besteht.

4. Gefäß nach einem der Ansprüche 1 bis 3, **dadurch gekennzeichnet, dass** die beiden äußeren Folien - insbesondere flüssigkeitsdicht - am Rand miteinander verbunden, z.B. verklebt oder verschweißt oder - mit oder ohne Klebstoff - z.B. durch Lackierung abgedichtet sind.

5. Gefäß nach Anspruch 4, **dadurch gekennzeichnet, dass** der Verschweißung ein Trennvorgang vorausgeht.

6. Gefäß nach Anspruch 5, **dadurch gekennzeichnet, dass** die Verschweißung - mit oder ohne Klebstoff - mit einem erhitzten Stanzwerkzeug oder einem Laserschneidgerät durchgeführt worden ist.

7. Gefäß nach einem oder mehreren der vorhergehenden Ansprüche, **dadurch gekennzeichnet, dass** auf der das Hologramm aufweisenden Trägerfolie oder auf den beiden äußeren Folien eine Lackierung z.B. Tauchlackierung, vorgesehen ist.

8. Gefäß nach einem der vorangegangenen Ansprüche, **dadurch gekennzeichnet, dass** die beiden äußeren Folien, der Klebstoff und/oder der Lack aus einem, insbesondere gegen hochprozentigen Alkohol, beständigem Material bestehen.

9. Gefäß nach einem der vorangegangenen Ansprüche, **dadurch gekennzeichnet, dass** es als Parfumflakon, Getränkeflasche oder Medizinflasche ausgebildet ist.
